# EUROPEAN PATENT SPECIFICATION

(11) **EP 2 371 875 B1**
(45) Date of publication and mention of the grant of the patent: **18.01.2017**
(21) Application number: 09836302.1
(22) Date of filing: 09.12.2009
(51) Int. Cl.: C08G 63/58, C08G 63/66, C08G 63/85, C08G 63/78

(54) **METHOD FOR PREPARING A POLYESTER RESIN IN WHICH ISOSORBIDE IS COPOLYMERIZED**
VERFAHREN ZUR HERSTELLUNG EINES POLYESTERHARZES MIT EINEM DARIN KOPOLYMERISIERTEN ISOSORBID
PROCÉDÉ POUR PRÉPARER UNE RÉSINE DE POLYESTER DANS LAQUELLE UN ISOSORBIDE EST COPOLYMÉRISÉ

(30) Priority: 31.12.2008 KR 20080138345
(43) Date of publication of application: 05.10.2011
(73) Proprietor: SK CHEMICALS CO., LTD., Gyeonggi-do 440-300 (KR)
(72) Inventor: PARK, Kyu Tae, Seoul 156-030 (KR); KIM, Jong Ryang, Suwon-si Gyeonggi-do 441-704 (KR)
(74) Representative: Lins, Martina
(86) International application number: PCT/KR2009/007339
(87) International publication number: WO 2010/076981

(56) References cited:
- KR-A- 20050 086 566
- US-A- 4 208 527
- US-A- 5 789 528
- US-A1- 2004 092 703
- US-A1- 2006 173 154
- US-A1- 2008 103 217
- US-B1- 6 559 272

## Description

### Technical Field

The present invention relates to a method of preparing a copolymerized polyester resin containing isosorbide, which includes esterification and polycondensation, in which upon esterification, glycols are added at a molar ratio of 1.05 ∼ 3.0 to terephthalic acid or dimethylterephthalate, and upon polycondensation, a titanium-based compound is used as a polycondensation catalyst and a phosphorus compound is used as a stabilizer.

### Background Art

Recently, polyester resins are regarded as important in fields including packaging materials, molded products, films, etc. However, homopolymers which are prepared from only terephthalic acid and ethyleneglycol have poor processability, and thus copolymerized polyester resins obtained from various glycols or dicarboxylic acids have stabilized their position as commercial polyesters. Although such polyester resins have been prepared mainly using an antimony catalyst, there is recent ongoing research into methods of substituting part or all of the antimony catalyst which has comparatively low catalytic activity and thus should be used in an excessive amount, with a titanium-based catalyst so that the reaction takes place, thus improving reactive properties and avoiding grey coloring which is a unique characteristic of the antimony catalyst.

As disclosed in US 5,681,918 and US 5,744,571, a titanium alkoxide catalyst may be added in a smaller amount and may improve reactive properties, compared to antimony-based catalysts, but sensitively reacts with water undesirably deteriorating reactive properties and precipitating as a deposit, making it difficult to store and handle. Furthermore, because this catalyst is affected by water generated upon transesterification, it should be added in an amount exceeding the required amount. From US 2006/0173154 A1 a process for making low color poly(ethylene-co-isoorbide) terephthalate polymer is known. US 6,559,272 B1 identifeis a for preparing coplyester resins using copolymers of titanium with silicon dioxide. Hence, limitations are imposed on increasing the molecular weight of final polyester resins or copolymerized polyester resins.

### Disclosure

### Technical Problem

Culminating in the present invention, intensive and thorough research into preparation of polyester resins having superior properties compared to conventionally prepared polyester resins, carried out by the present inventors aiming to solve the problems encountered in the related art, resulted in the finding that a titanium-based compound may be used as a polycondensation catalyst and a phosphorus compound may be used as a stabilizer in the preparation of a copolymerized polyester resin containing isosorbide, thus increasing reactive properties, so that preparing the copolymerized polyester may be done more productively.

Accordingly, an object of the present invention is to provide a method of preparing a copolymerized polyester resin containing isosorbide, which enables the copolymerized polyester resin to have a higher molecular weight than that of conventional copolymerized polyester resin and may reduce the amount of metal, thus increasing clarity of the resin.

### Technical Solution

In order to accomplish the above object, the present invention provides a method of preparing a copolymerized polyester resin containing isosorbide, comprising adding glycols including isosorbide to carboxylic acid such that the molar ratio of total glycols to carboxylic acid is 1.05 ∼ 3.0 to allow esterification to occur, thus obtaining an esterification product; and polycondensing the esterification product using a titanium-based compound as a polycondensation catalyst and a phosphorus compound as a stabilizer according to claim 1.

### Advantageous Effects

According to the present invention, polyester in which isosorbide is copolymerized, prepared by using a titanium-based compound comprising a copolymer of titanium dioxide and silicon dioxide or a copolymer of titanium dioxide and zirconium dioxide as a polycondensation catalyst, and a phosphorus compound as a stabilizeraccording to claim 1, can be superior in terms of various properties including intrinsic viscosity, color, productivity, etc., compared to conventionally prepared polyesters.

Even when the same amount of the catalyst is used, the color can be improved compared to when using a conventional titanium alkoxide catalyst. Also when the catalyst is used in a smaller amount, a color which is equal to or brighter than conventional cases can be produced, so that a final reaction product can have a decreased amount of metal and is improved in terms of clarity, resulting in copolymerized polyester resins having improved clarity and color.

Furthermore, when using the same amount of the element compared to antimony-based and germanium-based catalysts, polyester having high molecular weight can be polymerized within a period of time similar to conventional cases, and thus producing a copolymerized polyester resin can be more productive.

### Best Mode

Hereinafter, a detailed description will be given of the present invention.

The present invention pertains to a method of preparing a copolymerized polyester containing isosorbide, which includes adding glycols including isosorbide to carboxylic acid such that the molar ratio of total glycols to carboxylic acid is 1.05 - 3.0 to allow esterification to occur, and polycondensing the esterification product using a titanium-based compound as a catalyst and a phosphorus compound as a stabilizer.

Polyester and copolymerized polyester are typically prepared via two-step processes regardless of structures ranging from aliphatic materials to wholly aromatic materials, comprising a first step of transesterification of dicarboxylic acid ester or esterification of dicarboxylic acid with an excess of dialcohol thus producing ester that is to be polycondensed, and a second step of polycondensation thus obtaining desired high-molecular-weight polyester or copolymerized polyester and removing alcohol and/or water.

With regard to the present invention, the method of preparing a copolymerized polyester containing isosorbide using dicarboxylic acid such as terephthalic acid includes adding glycols including ethyleneglycol and isosorbide to a dicarboxylic acid such as terephthalic acid such that the molar ratio of total glycols to dicarboxylic acid is 1.05 - 3.0 to allow esterification to occur under conditions of 230 - 260°C and 0.1 - 3.0 kg/cm². In the case where the glycol component is added in an amount falling outside of the above molar ratio to carboxylic acid, esterification becomes unstable, undesirably making it impossible to sufficiently form an ester oligomer and making it difficult to exhibit the properties of isosorbide. The amount of added isosorbide is set to be close to the desired mol% in the final polymer. In the present invention, in order to prevent processability from deteriorating due to crystallization, isosorbide is added in an amount of 1 - 90 mol%, and particularly 20 - 90 mol% based on the total amount of glycols. If the amount of isosorbide is less than 1% based on the total amount of glycols, there is no improvement in moldability. In contrast, if the amount thereof is larger than 90%, excessive crystallization may take place, undesirably causing problems with post-treatment and deteriorating mechanical properties.

Esterification is carried out under conditions of 220 - 280°C and pressure of 0 - 3.0 kg/cm². As such, the reaction temperature for esterification may be 240 - 260°C, particularly 245 ∼ 255°C. Also the reaction time for esterification is about 100 ∼ 500 min, and may vary depending on the reaction temperature, the pressure, and the molar ratio of glycol to dicarboxylic acid. In the method of preparing a polyester resin according to the present invention including esterification and polycondensation, esterification does not require a catalyst, but a catalyst may be added to reduce the reaction time.

Also in the first step, esterification may be carried out in batch or continuous mode, and respective materials may be separately added, but addition of terephthalic acid in a slurry form to glycols is very favorable. A glycol such as isosorbide which is solid at room temperature is dissolved in water or ethylene glycol (i.e. EG) thus forming a slurry with terephthalic acid, or water may be further added to the slurry comprising terephthalic acid, glycol and isosorbide in order to increase solubility of isosorbide, or the slurry may be prepared at 60°C or higher so that isosorbide is dissolved.

After the completion of esterification in the first step, the second step of polycondensation is carried out. Before polycondensation of the second step, the esterification product is added with a polycondensation catalyst, a stabilizer and a coloring agent etc.

Also the dicarboxylic acid compound used to enhance properties in addition to terephthalic acid includes isophthalic acid, 1,4-cyclohexanedicarboxylic acid, 1,3-cyclohexanedicarboxlic acid, succinic acid, glutaric acid, adipic acid, sebacic acid, and 2,6-naphthalene dicarboxylic acid.

The polycondensation catalyst is appropriately selected from a copolymer of titanium dioxide and silicon dioxide, and a copolymer of titanium dioxide and zirconium dioxide. The copolymer of titanium dioxide and silicon dioxide or the copolymer of titanium dioxide and zirconium dioxide, which is adapted for the purpose of the present invention, is not sensitive to water and is thus easily stored and handled to improve reactive properties and increase productivity, or the above catalyst compounds may be used alone or in mixtures of two or more thereof. The catalyst is used in the amount of 1 - 100 ppm of the titanium element based on the weight of the final polymer, and particularly in the amount of 1 - 50 ppm of the titanium element. The amount of added catalyst, which affects the color of the final polymer, may vary depending on the desired color and the kind of stabilizer and coloring agent.

Also, a stabilizer is used as additional additive. The stabilizer is a phosphorous element including phosphoric acid, trimethyl phosphate, triethyl phosphate, etc., and is used in the amount of 30 - 50 ppm of a phosphorus element based on the weight of the final polymer. If the amount of the stabilizer is less than 10 ppm, stabilization effects may become poor and thus the color of the polymer may turn to yellow. In contrast, if the amount thereof exceeds 100 ppm, the degree of polymerization cannot reach the desired high level.

Furthermore, a coloring agent usable to improve the color is cobalt acetate or cobalt propionate, and may be used in the amount of 0 ∼ 100 ppm based on the weight of the final polymer. In addition to the above examples of the coloring agent, an organic compound may also be used as a coloring agent.

Polycondensation in the second step may be carried out at 250 - 290°C under a reduced pressure of 400 - 0.1 mmHg. Polycondensation is carried out for the period of time required to reach the desired intrinsic viscosity, and the reaction temperature thereof is set to 250 - 290°C, particularly 260 - 280°C. Also, polycondensation is carried out under a reduced pressure of 400 - 0.1 mmHg to eliminate glycol produced as a by-product, thereby obtaining the copolymerized polyester resin containing isosorbide according to the present invention.

### Mode for Invention

The following examples are set forth to illustrate the present invention, but are not to be construed as limiting the present invention, and may provide a better understanding of the present invention. Unless otherwise stated in the following examples and comparative examples, the unit "parts" indicates "parts by weight" and the properties were measured according to the following methods.
⊚ Intrinsic Viscosity (IV): A product was dissolved at a concentration of 0.12% in ortho-chlorophenol at 150°C and then its intrinsic viscosity was measured using a Ubbelohde viscometer in a thermostat at 35°C.
⊚ Color: Measurement was performed using a colorgard system available from Pacific Scientific.

### Example 1

In a 3 L reactor equipped with a stirrer and a discharge condenser, 1190 parts of terephthalic acid, 300 parts of isosorbide, and 540 parts of ethyleneglycol were placed, and allowed to react while the pressure was increased to 2.0 kg/cm² with nitrogen and the temperature of the reactor was gradually increased to 255°C. As such, generated water was discharged to the outside, so that esterification was carried out. After the completion of the generation and discharge of water, the resulting esterification product was transferred into a polycondensation reactor equipped with a stirrer, a cooling condenser and a vacuum system. To the esterification product, a copolymer of titanium dioxide and silicon dioxide was added in an amount of 20 ppm of the titanium element based on the amount of final polymer, and triethyl phosphate was added in an amount of 30 ppm of the phosphorus element based on the amount of the final polymer, and cobalt acetate was added in an amount of 60 ppm of the cobalt element based on the amount of the final polymer. While the internal temperature of the reactor was increased from 240°C to 275°C, ethyleneglycol was removed in a low vacuum atmosphere of 50 mmHg which was arrived at by decreasing from atmospheric pressure for 40 min. Subsequently, the pressure was gradually reduced to 0.1 mmHg to create a high vacuum atmosphere under which the reaction was carried out until the desired intrinsic viscosity was obtained. The reaction product was removed from the reactor and cut into the form of chips. The intrinsic viscosity and the color of the copolymerized polyester resin containing isosorbide were measured using the above methods. The intrinsic viscosity, the polycondensation time and the color are shown in Table 1 below.

### Comparative Examples 1 and 2

A copolymerized polyester resin was prepared in the same manner as in Example 1, with the exception that the kind of catalyst was changed as shown in Table 1 below. The intrinsic viscosity, the polycondensation time and the color are shown in Table 1 below.

**TABLE 1**

| | Catalyst | Intrinsic Viscosity | Polycondensation Time | Color-b |
|---|---|---|---|---|
| Ex. 1 | Catalyst-1 | 0.650 | 180 | 8.2 |
| C.Ex. 1 | Catalyst-2 | 0.651 | 225 | 11.8 |
| C.Ex. 2 | Catalyst-3 | 0.649 | 250 | 12.4 |

| | | | | |
|---|---|---|---|---|
| Catalyst-1: copolymer of titanium dioxide and silicon dioxide Catalyst-2: tetrapropyl titanate Catalyst-3: tetrabutyl titanate | | | | |

### Example 2

In a 1000 mL reactor equipped with a stirrer and a discharge condenser, 320 parts of terephthalic acid, 80 parts of isosorbide, and 140 parts of ethyleneglycol were placed, and allowed to react while the pressure was increased to 1.0 kg/cm² with nitrogen and the temperature of the reactor was gradually increased to 255°C. As such, generated water was discharged to the outside, so that esterification was carried out. After the completion of the generation and discharge of water, the resulting esterification product was transferred into a polycondensation reactor equipped with a stirrer, a cooling condenser and a vacuum system. To the esterification product, a copolymer of titanium dioxide and silicon dioxide was added in an amount of 20 ppm of the titanium element based on the amount of final polymer, and phosphoric acid was added in an amount of 30 ppm of the phosphorus element based on the amount of the final polymer, and cobalt acetate was added in an amount of 60 ppm of the cobalt element based on the amount of the final polymer. While the internal temperature of the reactor was increased from 240°C to 275°C, ethyleneglycol was removed in a low vacuum atmosphere of 50 mmHg which was arrived at by decreasing from atmospheric pressure for 40 min. Subsequently, the pressure was gradually reduced to 0.1 mmHg to create a high vacuum atmosphere under which the reaction was carried out until the desired intrinsic viscosity was obtained. The reaction product was removed from the reactor and cut into the form of chips. The intrinsic viscosity and the color of the copolymerized polyester resin containing isosorbide were measured. The intrinsic viscosity, the polycondensation time and the color are shown in Table 2 below.

### Comparative Examples 3 and 4

A copolymerized polyester resin was prepared in the same manner as in Example 2, with the exception that the kind of catalyst was changed as shown in Table 2 below. The intrinsic viscosity, the polycondensation time and the color are shown in Table 2 below.

**TABLE 2**

| | Catalyst | Intrinsic Viscosity | Polycondensation Time | Color-b |
|---|---|---|---|---|
| Ex. 2 | Catalyst-1 | 0.652 | 160 | 8.4 |
| C.Ex. 3 | Catalyst-2 | 0.647 | 178 | 10.5 |
| C.Ex. 4 | Catalyst-3 | 0.650 | 220 | 11.2 |

### Example 3

In a 1000 mL reactor equipped with a stirrer and a discharge condenser, 320 parts of terephthalic acid, 80 parts of isosorbide, and 140 parts of ethyleneglycol were placed, and allowed to react while the pressure was increased to 1.0 kg/cm² with nitrogen and the temperature of the reactor was gradually increased to 255°C. As such, generated water was discharged to the outside, so that esterification was carried out. After the completion of the generation and discharge of water, the resulting esterification product was transferred into a polycondensation reactor equipped with a stirrer, a cooling condenser and a vacuum system. To the esterification product, a copolymer of titanium dioxide and silicon dioxide was added in an amount of 30 ppm of the titanium element based on the amount of final polymer, and phosphoric acid was added in an amount of 50 ppm of the phosphorus element based on the amount of the final polymer, and cobalt acetate was added in an amount of 80 ppm of the cobalt element based on the amount of the final polymer. While the internal temperature of the reactor was increased from 240°C to 270°C, ethyleneglycol was removed in a low vacuum atmosphere of 50 mmHg which was arrived at by decreasing from atmospheric pressure for 40 min. Subsequently, the pressure was gradually reduced to 0.1 mmHg to create a high vacuum atmosphere under which the reaction was carried out until the desired intrinsic viscosity was obtained. The reaction product was removed from the reactor and cut into the form of chips. The intrinsic viscosity and the color of the copolymerized polyester resin containing isosorbide were measured. The intrinsic viscosity, the polycondensation time and the color are shown in Table 3 below.

### Comparative Examples 5 and 6

A copolymerized polyester resin was prepared in the same manner as in Example 3, with the exception that the kind of catalyst was changed as shown in Table 3 below. The intrinsic viscosity and the color are shown together with the reaction conditions in Table 3 below.

**TABLE 3**

| | Catalyst | Intrinsic Viscosity | Polycondensation Time | Color-b |
|---|---|---|---|---|
| Ex. 3 | Catalyst-1 | 0.660 | 137 | 6.4 |
| C.Ex. 5 | Catalyst-2 | 0.661 | 170 | 9.9 |
| C.Ex. 6 | Catalyst-3 | 0.665 | 206 | 10.8 |

### Example 4

In a 3 L reactor equipped with a stirrer and a discharge condenser, 1100 parts of terephthalic acid, 80 parts of isosorbide, 195 parts of 1,4-cyclohexanedimethanol, and 310 parts of ethyleneglycol were placed, and allowed to react while the pressure was increased to 1.0 kg/cm² with nitrogen and the temperature of the reactor was gradually increased to 255°C. As such, generated water was discharged to the outside, so that esterification was carried out. After the completion of the generation and discharge of water, the resulting esterification product was transferred into a polycondensation reactor equipped with a stirrer, a cooling condenser and a vacuum system. To the esterification product, a copolymer of titanium dioxide and silicon dioxide was added in an amount of 30 ppm of the titanium element based on the amount of final polymer, and phosphoric acid was added in an amount of 50 ppm of the phosphorus element based on the amount of the final polymer, and cobalt acetate was added in an amount of 80 ppm of the cobalt element based on the amount of the final polymer. While the internal temperature of the reactor was increased from 240°C to 270°C, ethyleneglycol was removed in a low vacuum atmosphere of 50 mmHg which was arrived at by decreasing from atmospheric pressure for 40 min. Subsequently, the pressure was gradually reduced to 0.1 mmHg to create a high vacuum atmosphere under which the reaction was carried out until the desired intrinsic viscosity was obtained. The reaction product was removed from the reactor and cut into the form of chips. The intrinsic viscosity and the color of the copolymerized polyester resin containing isosorbide were measured. The intrinsic viscosity, the polycondensation time and the color are shown in Table 3 below.

### Comparative Examples 7 and 8

A copolymerized polyester resin was prepared in the same manner as in Example 4, with the exception that the kind of catalyst was changed as shown in Table 4 below. The intrinsic viscosity and the color are shown together with the reaction conditions in Table 4 below.

**TABLE4**

| | Catalyst | Intrinsic Viscosity | Polycondensation Time | Color-b |
|---|---|---|---|---|
| Ex. 4 | Catalyst-1 | 0.663 | 127 | 6.0 |
| C.Ex. 7 | Catalyst-2 | 0.664 | 165 | 9.2 |
| C.Ex. 8 | Catalyst-3 | 0.656 | 205 | 10.2 |

### Example 5

In a 3 L reactor equipped with a stirrer and a discharge condenser, 1100 parts of terephthalic acid, 80 parts of isosorbide, 195 parts of 1,4-cyclohexanedimethanol, and 310 parts of ethyleneglycol were placed, and allowed to react while the pressure was increased to 1.0 kg/cm² with nitrogen and the temperature of the reactor was gradually increased to 255°C. As such, generated water was discharged to the outside, so that esterification was carried out. After the completion of the generation and discharge of water, the resulting esterification product was transferred into a polycondensation reactor equipped with a stirrer, a cooling condenser and a vacuum system. To the esterification product, a copolymer of titanium dioxide and silicon dioxide was added in an amount of 30 ppm of the titanium element based on the amount of final polymer, and phosphoric acid was added in an amount of 50 ppm of the phosphorus element based on the amount of the final polymer, and cobalt acetate was added in an amount of 80 ppm of the cobalt element based on the amount of the final polymer. While the internal temperature of the reactor was increased from 240°C to 270°C, ethyleneglycol was removed in a low vacuum atmosphere of 50 mmHg which was arrived at by decreasing from atmospheric pressure for 40 min. Subsequently, the pressure was gradually reduced to 0.1 mmHg to create a high vacuum atmosphere under which the reaction was carried out until the desired intrinsic viscosity was obtained. The reaction product was removed from the reactor and cut into the form of chips. The intrinsic viscosity and the color of the copolymerized polyester resin containing isosorbide were measured. The intrinsic viscosity, the polycondensation time and the color are shown in Table 3 below.

### Comparative Examples 9 and 10

A copolymerized polyester resin was prepared in the same manner as in Example 5, with the exception that the kind of catalyst was changed as shown in Table 5 below. The intrinsic viscosity and the color are shown together with the reaction conditions in Table 5 below.

**TABLE 5**

| | Catalyst | Intrinsic Viscosity | Polycondensation Time | Color-b |
|---|---|---|---|---|
| Ex. 5 | Catalyst-1 | 0.651 | 127 | 6.0 |
| C.Ex. 9 | Catalyst-4 | 0.380 | 130 | 4.4 |
| C.Ex. 10 | Catalyst-5 | 0.354 | 135 | 3.8 |

| | | | | |
|---|---|---|---|---|
| Catalyst-4: antimony trioxide (30 ppm of antimony element) Catalyst-5: germanium oxide (30 ppm of germanium element) | | | | |

As disclosed above, in the preparation of the copolymerized polyester resin containing 1 ∼ 90 mol% of isosorbide, the copolymerized polyester resin finally obtained using the copolymer of titanium dioxide and silicon dioxide or the copolymer of titanium dioxide and zirconium dioxide as the polycondensation catalyst can exhibit superior reactive properties, thereby increasing productivity.

## Claims

1. A method of preparing a copolymerized polyester resin containing isosorbide, comprising:
adding glycols including isosorbide to carboxylic acid such that a molar ratio of total glycols to carboxylic acid is 1.05-3.0 to allow esterification to occur, thus obtaining an esterification product; and
polycondensing the esterification product in the presence of a titanium-based compound as a polycondensation catalyst and a phosphorus compound as a stabilizer, in which, based on weight of the final polymer, the titanium-based compound is used in an amount of 1-100 ppm of titanium element, the phosphorus compound is used in an amount of 30-50 ppm of phosphorus element and cobalt acetate or cobalt propionate as a coloring agent in an amount of 0-100 ppm.
wherein the titanium-based compound is selected from the group consisting of a copolymer of titanium dioxide and silicon dioxide, a copolymer of titanium dioxide and zirconium dioxide, and mixtures thereof.

2. The method of claim 1, wherein the isosorbide is added in an amount of 1-90 mol % based on a total amount of the glycols.

3. The method of claim 2, wherein the isosorbide is added in an amount of 20-90 mol % based on a total amount of the glycols.

4. The method of claim 1, wherein the titanium-based compound is used in an amount of 1-50 ppm of titanium element based on the weight of the final polymer.

5. The method of claim 1, wherein the phosphorus compound is phosphoric acid, trimethyl phosphate, or triethyl phosphate.

## Patentansprüche

1. Verfahren zur Herstellung eines kopolymerisierten Isosorbid enthaltenden Polyesterharzes, umfassend:
• Zugabe von Glykol einschließlich Isosorbid zu Carbonsäure derart, dass das molare Verhältnis von Gesamtglykol zu Carbonsäure 1,05 - 3,0 ist, um eine Veresterung stattfinden zu lassen, zum Erhalt eines veresterten Produktes; und
• Polykondensieren des veresterten Produktes in Anwesenheit einer titanbasierten Verbindung als ein Polykondensationskatalysator und einer Phosphorverbindung als ein Stabilisator bei dem, bezogen auf das Gewicht des Endpolymers die verwendete titanbasierte Verbindung in einer Menge von 1 bis 100 ppm Titan verwendet wird, die Phosphorverbindung in einer Menge von 30 bis 50 ppm Phosphor verwendet wird und Kobaltacetat oder Kobaltpropionat als Färbemittel in einer Menge von 0 bis 100 ppm, wobei die titanbasierte Verbindung ausgewählt ist aus der Gruppe bestehend aus einem Copolymer von Titandioxid und Siliziumdioxid, ein Copolymer von Titandioxid und Zirkoniumdioxid und Mischungen hiervon.

2. Verfahren nach Anspruch 1, wobei das Isosorbid zugegeben wird in einer Menge von 1 bis 90 mol % bezogen auf die Gesamtmenge an Glykol.

3. Verfahren nach Anspruch 2, wobei das Isosorbid in einer Menge von 20 bis 90 mol % bezogen auf die Gesamtmenge an Glykol zugegeben wird.

4. Verfahren nach Anspruch 1, wobei die titanbasierte Verbindung verwendet wird in einer Menge von 1 bis 50 ppm Titan bezogen auf das Gewicht des Gesamtpolymers.

5. Verfahren nach Anspruch 1, wobei die Phosphorverbindung als Phosphorsäure, Trimethylphosphat oder Triethylphosphat ist.

## Revendications

1. Procédé de préparation d'une résine de polyester copolymérisé contenant de l'isosorbide, comprenant :
l'ajout de glycols incluant de l'isosorbide à de l'acide carboxylique de sorte qu'un rapport molaire de la totalité de glycol sur l'acide carboxylique soit compris entre 1,05 à 3,0 pour permettre à l'estérification de se produire, obtenant ainsi un produit d'estérification ; et
la polycondensation du produit d'estérification en présence d'un composé à base de titane en tant que catalyseur de polycondensation et d'un composé phosphoré en tant que stabilisant, dans laquelle, par rapport à la masse du polymère final, le composé à base de titane est utilisé à une teneur de 1 à 100 ppm de titane élémentaire, le composé phosphoré est utilisé à une teneur de 30 à 50 ppm de phosphore élémentaire et de l'acétate de cobalt ou du propionate de cobalt en tant qu'agent colorant à une teneur de 0 à 100 ppm,
où le composé à base de titane est choisi dans le groupe constitué par un copolymère de dioxyde de titane et de dioxyde de silicium, un copolymère de dioxyde de titane et de dioxyde de zirconium, et leurs mélanges.

2. Procédé selon la revendication 1, où l'isosorbide est ajouté à une teneur de 1 à 90 % molaires par rapport à la quantité totale de glycols.

3. Procédé selon la revendication 2, où l'isosorbide est ajouté à une teneur de 20 à 90 % molaires par rapport à la quantité totale de glycols.

4. Procédé selon la revendication 1, où le composé à base de titane est utilisé à une teneur de 1 à 50 ppm de titane élémentaire par rapport à la masse du polymère final.

5. Procédé selon la revendication 1, où le composé phosphoré est l'acide phosphorique, le phosphate de triméthyle ou le phosphate de triéthyle.
